# EUROPEAN PATENT APPLICATION

(11) **EP 4 131 022 A1**
(43) Date of publication of application: **08.02.2023**
(21) Application number: 22189049.4
(22) Date of filing: 05.08.2022
(51) Int. Cl.: G06F 16/332, G06F 16/33, G06F 16/901

(54) **METHOD AND APPARATUS OF DETERMINING LOCATION INFORMATION, ELECTRONIC DEVICE, STORAGE MEDIUM, AND PROGRAM PRODUCT**

(30) Priority: 06.08.2021 CN 202110905426
(71) Applicant: BEIJING BAIDU NETCOM SCIENCE TECHNOLOGY CO., LTD., Beijing 100085 (CN)
(72) Inventor: Pan, Xu, Beijing, 100085 (CN); Huang, Qiang, Beijing, 100085 (CN); Xu, Siqi, Beijing, 100085 (CN); Liu, Chenhui, Beijing, 100085 (CN); Hong, Saiding, Beijing, 100085 (CN); Yang, Zhe, Beijing, 100085 (CN); Liu, Chong, Beijing, 100085 (CN)
(74) Representative: Hoffmann Eitle

(57) **Abstract**

A method and an apparatus of determining a location information, an electronic device, a storage medium, and a program product, which relate to a field of an artificial intelligence technology, and in particular, to fields of NLP and knowledge graph. The method includes: determining at least one location chain corresponding to a location information in a text to be recognized, wherein each of the at least one location chain includes a plurality of chain nodes cascaded according to a subordination relationship, and each level of chain node represents a current level name corresponding to the location information; and determining, from the at least one location chain, a target location chain having a greatest degree of relevance to the text to be recognized, according to a feature word indicating a location attribute in the text to be recognized.

## Description

### TECHNICAL FIELD

The present disclosure relates to a field of an artificial intelligence technology, and in particular, to fields of NLP (Natural Language Processing) and knowledge graph.

### BACKGROUND

NLP (Natural Language Processing) refers to causing a computer to: receive a user's input in a form of a natural language, internally perform a series of operations such as processing, calculation, etc. through an algorithm defined by human, so as to simulate a human understanding of the natural language, and return a desired result to the user. A purpose of the NLP is to use the computer instead of the human to process large-scale natural language information. For example, a recognition of a location information in a text may be implemented based on the NLP.

### SUMMARY

The present disclosure provides a method and an apparatus of determining a location information, an electronic device, a storage medium, and a program product.

According to an aspect of the present disclosure, a method of determining a location information is provided, including: determining at least one location chain corresponding to a location information in a text to be recognized, wherein each of the at least one location chain includes a plurality of chain nodes cascaded according to a subordination relationship, and each level of chain node represents a current level name corresponding to the location information; and determining, from the at least one location chain, a target location chain having a greatest degree of relevance to the text to be recognized, according to a feature word indicating a location attribute in the text to be recognized.

According to an aspect of the present disclosure, an apparatus of determining a location information is provided, including: a first determination module configured to determine at least one location chain corresponding to a location information in a text to be recognized, wherein each of the at least one location chain includes a plurality of chain nodes cascaded according to a subordination relationship, and each level of chain node represents a current level name corresponding to the location information; and a second determination module configured to determine, from the at least one location chain, a target location chain having a greatest degree of relevance to the text to be recognized, according to a feature word indicating a location attribute in the text to be recognized.

According to an aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of determining the location information as described above.

According to an aspect of the present disclosure, a non-transitory computer-readable storage medium having computer instructions therein is provided, and the computer instructions are configured to cause a computer system to implement the method of determining the location information as described above.

According to an aspect of the present disclosure, a computer program product containing a computer program is provided, and the computer program, when executed by a processor, causes the processor to implement the method of determining the location information as described above.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, wherein:
FIG. 1 schematically shows an exemplary system architecture in which a method and an apparatus of determining a location information may be applied according to embodiments of the present disclosure;
FIG. 2 schematically shows a flowchart of a method of determining a location information according to embodiments of the present disclosure;
FIG. 3 schematically shows another flowchart of a method of determining a location information according to embodiments of the present disclosure;
FIG. 4 schematically shows a schematic diagram of an administrative region knowledge graph according to embodiments of the present disclosure;
FIG. 5 schematically shows a schematic diagram of a method of determining a location information according to embodiments of the present disclosure;
FIG. 6 schematically shows a block diagram of an apparatus of determining a location information according to embodiments of the present disclosure; and
FIG. 7 shows a schematic block diagram of an exemplary electronic device for implementing embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

In the technical solution of the present disclosure, the collection, storage, use, processing, transmission, provision, disclosure and application of the location information involved are all in compliance with the provisions of relevant laws and regulations, and necessary confidentiality measures have been taken, and it does not violate public order and good morals. In the technical solution of the present disclosure, before obtaining or collecting the user's personal information, the user's authorization or consent is obtained.

In embodiments of the present disclosure, X represents a location information, which may be specifically expressed as A, B, C or other locations. X' represents a name of a superior administrative region of X; and X" represents a name of a superior administrative region of X'. For example, when X is a name of a district (county)-level administrative region, X' is a name of a municipal-level administrative region; when X is a name of a municipal-level administrative region, X' is a name of a provincial-level administrative region; when X is a name of a provincial-level administrative region, X' is a name of a country, and the like. X may represent an alias of Province X, City X, District (County) X, or the like; X_{name_1}, X_{name_2},..., X_{name_n} and so on may represent aliases of X; and X_{brother_1}, X_{brother_2},..., X_{brother_n} and so on may represent names of administrative regions at the same level as X, where n is a positive integer. For example, A and A_{name_1} may be aliases of City A, A_{brother_1} may be a name of another prefecture-level city in a province corresponding to City A. When X may correspond to a plurality of different regions, names of superior administrative regions of X in different regions may be represented by X_{adm_1}, X_{adm_2},..., X_{adm_n}. For example, if X may correspond to three different regions belonging to different administrative regions, then X in the three different regions may be expressed as "District X-City X_{adm_1}'", "District X-City X_{adm_2}'-Province X_{adm_2}"", "City X-Province X_{adm_3}'".

Generally, for a recognition of a location information in a text, it is only implemented to recognize a level of "City", and a normalization and a complementation are not performed for a location. Moreover, a character string matching is generally used to process location ambiguity, resulting in a location recognition error and a normalization error.

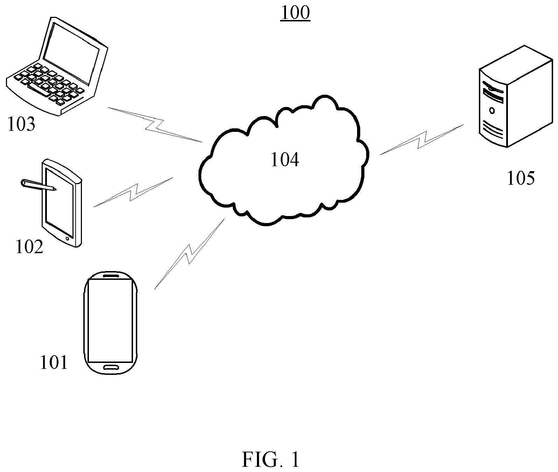

FIG. 1 schematically shows an exemplary system architecture in which a method and an apparatus of determining a location information may be applied according to embodiments of the present disclosure.

It should be noted that FIG. 1 is only an example of a system architecture in which embodiments of the present disclosure may be applied, so as to help those skilled in the art to understand the technical content of the present disclosure. It does not mean that embodiments of the present disclosure may not be applied to other devices, systems, environments or scenarios. For example, in another embodiment, the exemplary system architecture in which the method and the apparatus of determining the location information may be applied may include a terminal device, and the terminal device may be used to implement the method and the apparatus of determining the location information provided by embodiments of the present disclosure without interacting with the server.

As shown in FIG. 1, a system architecture 100 according to this embodiment may include terminal devices 101, 102, 103, a network 104, and a server 105. The network 104 is used to provide a medium for a communication link between the terminal devices 101, 102, 103 and the server 105. The network 104 may include various connection types, such as wired or wireless communication links, etc.

The terminal devices 101, 102, 103 may be used by a user to interact with the server 105 via the network 104 so as to receive or send messages, etc. Various communication client applications, such as knowledge reading applications, web browser applications, search applications, instant messaging tools, mailbox clients and/or social platform software, etc. (for example only), may be installed on the terminal devices 101, 102 and 103.

The terminal devices 101, 102 and 103 may be various electronic devices having display screens and supporting web browsing, including but not limited to smartphones, tablet computers, laptop computers, desktop computers, etc.

The server 105 may be a server that provides various services, such as a background management server (for example only) that provides a support for a content browsed by the user using the terminal devices 101, 102 and 103. The background management server may process, such as analyze a received user request and other data, and feed back a processing result (such as a web page, information, or data acquired or generated according to the user request) to the terminal devices. The server may be a cloud server, also known as a cloud computing server or a cloud host, which is a host product in a cloud computing service system to solve shortcomings of difficult management and weak business scalability existing in an existing physical host and VPS (Virtual Private Server) service. The server may also be a server of a distributed system or a server combined with a block-chain.

It should be noted that the method of determining the location information provided by embodiments of the present disclosure may generally be performed by the terminal device 101, 102 or 103. Accordingly, the apparatus of determining the location information provided by embodiments of the present disclosure may also be provided in the terminal device 101, 102 or 103.

Alternatively, the method of determining the location information provided by embodiments of the present disclosure may also be generally performed by the server 105. Accordingly, the apparatus of determining the location information provided by embodiments of the present disclosure may also be generally provided in the server 105. The method of determining the location information provided by embodiments of the present disclosure may also be performed by a server or server cluster different from the server 105 and capable of communicating with the terminal devices 101, 102, 103 and/or the server 105. Accordingly, the apparatus of determining the location information provided by embodiments of the present disclosure may also be provided in a server or server cluster different from the server 105 and capable of communicating with the terminal devices 101, 102, 103 and/or the server 105.

For example, when it is needed to recognize a location information in a text, the terminal devices 101, 102, 103 may determine at least one location chain corresponding to the location information in the text to be recognized. Each location chain includes a plurality of chain nodes cascaded according to a subordination relationship, and each level of chain node represents a current level name corresponding to the location information. The terminal devices 101, 102, 103 may further determine a target location chain related to the text to be recognized from the at least one location chain, according to a feature word indicating a location attribute in the text to be recognized. Alternatively, the text to be recognized may be analyzed by the server or server cluster capable of communicating with the terminal devices 101, 102, 103 and/or the server 105, so as to determine the target location chain related to the text to be recognized.

It should be understood that the number of terminal devices, network and server shown in FIG. 1 is only schematic. According to implementation needs, any number of terminal device, network and server may be provided.

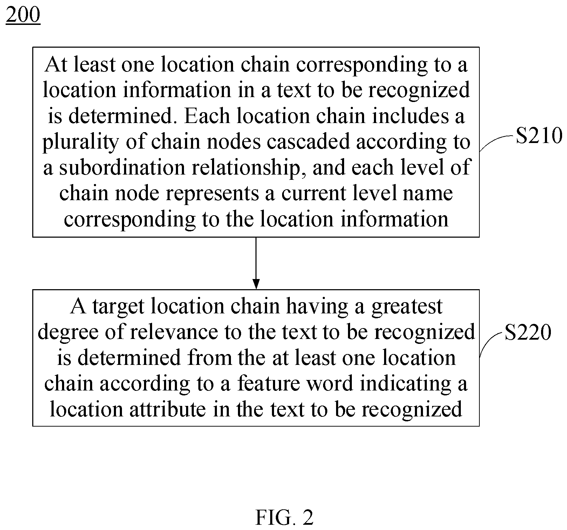

FIG. 2 schematically shows a flowchart of a method of determining a location information according to embodiments of the present disclosure.

As shown in FIG. 2, the method includes operations S210 to S220.

In operation S210, at least one location chain corresponding to a location information in a text to be recognized is determined. Each location chain includes a plurality of chain nodes cascaded according to a subordination relationship, and each level of chain node represents a current level name corresponding to the location information.

In operation S220, a target location chain having a greatest degree of relevance to the text to be recognized is determined from the at least one location chain, according to a feature word indicating a location attribute in the text to be recognized.

According to embodiments of the present disclosure, the text to be recognized may be various types of text, including a web page text or a document text containing the location information. The location chain may be a location chain formed by cascading administrative regions. Each chain node may represent a name of a level of administrative region.

According to embodiments of the present disclosure, the feature word indicating the location attribute may include at least one selected from: a local food, a scenic spot, a historical event, a geographical feature, an environmental feature, etc. that may represent a location.

According to embodiments of the present disclosure, for a location information in the text to be recognized, at least one place name information related to the location information may be obtained correspondingly. In a case of obtaining a plurality of place name information that may not be associated with each other, an another feature word indicating the location attribute in the text to be recognized may be further recognized, so as to further select and determine a unique place name information having a greatest degree of relevance to the text to be recognized according to the another feature word. In a case that only one place name information is obtained, an accuracy of the obtained place name information may be further determined according to a feature word in the text to be recognized.

According to embodiments of the present disclosure, the determined place name information may be a location chain containing names of various levels of administrative regions corresponding to the location information, which may be specifically expressed in a form of: District (County) XX, City XX, Province XX

Through above-described embodiments of the present disclosure, a disambiguation may be performed on the at least one location chain corresponding to the location information in the text to be recognized according to the feature word indicating the location attribute in the text to be recognized, so as to determine the target location chain having a greatest degree of relevance to the text to be recognized, so that the accuracy of the determined target location chain may be effectively improved.

The method shown in FIG. 2 will be further described below in conjunction with the accompanying drawings and specific embodiments.

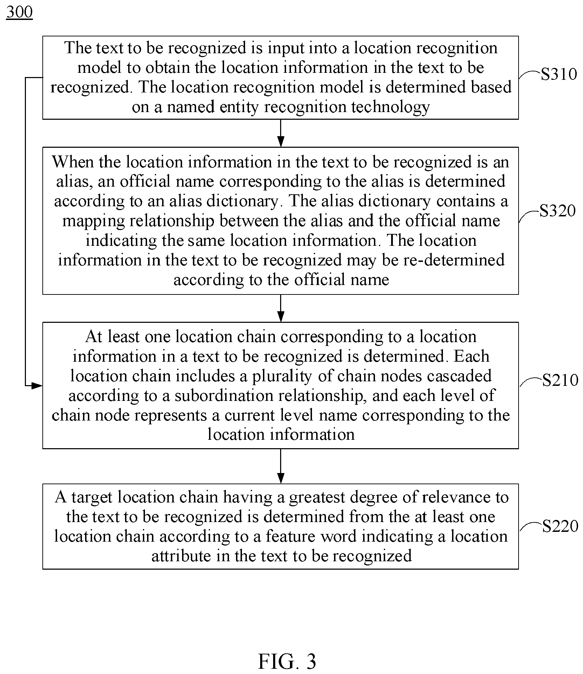

FIG. 3 schematically shows another flowchart of a method of determining a location information according to embodiments of the present disclosure.

According to embodiments of the present disclosure, as shown in FIG. 3, the method of determining the location information may also be implemented as performing operation S310 and then performing operations S210 to S220.

In operation S310, a text to be recognized is input into a location recognition model to obtain a location information in the text to be recognized. The location recognition model is determined based on a named entity recognition technology.

In operation S210, at least one location chain corresponding to the location information in the text to be recognized is determined. Each location chain includes a plurality of chain nodes cascaded according to a subordination relationship, and each level of chain node represents a current level name corresponding to the location information.

In operation S220, a target location chain having a greatest degree of relevance to the text to be recognized is determined from the at least one location chain, according to a feature word indicating a location attribute in the text to be recognized.

According to embodiments of the present disclosure, for example, the named entity recognition technology may be used to recognize the location information in the text to be recognized. For example, a location recognition model with a named entity recognition function may be trained based on BiLstm-CRF (a named entity recognition model), so that the location information in the text to be recognized may be recognized using the location recognition model. The location recognition model may be trained by collecting a text corpus containing the location information and annotating a location entity in the text corpus.

Through above-described embodiments of the present disclosure, the recognition of the location information using the named entity recognition technology may be implemented to effectively improve the accuracy and integrity of the recognized location information.

According to embodiments of the present disclosure, as shown in FIG. 3, the method of determining the location information may also be implemented as performing operations S310 to S320 and then performing operations S210 to S220.

In operation S310, a text to be recognized is input into a location recognition model to obtain a location information in the text to be recognized. The location recognition model is determined based on the named entity recognition technology.

In operation S320, when the location information in the text to be recognized is an alias, an official name corresponding to the alias is determined according to an alias dictionary. The alias dictionary contains a mapping relationship between the alias and the official name indicating the same location information. The location information in the text to be recognized may be re-determined according to the official name.

In operation S210, at least one location chain corresponding to the location information in the text to be recognized is determined. Each location chain includes a plurality of chain nodes cascaded according to a subordination relationship, and each level of chain node represents a current level name corresponding to the location information.

In operation S220, a target location chain having a greatest degree of relevance to the text to be recognized is determined from the at least one location chain according to a feature word indicating a location attribute in the text to be recognized.

According to embodiments of the present disclosure, the official name may be an ancient place name and/or a modern place name. The ancient place name may indicate an ancient official name, and the modern place name may indicate a modern official name. The alias dictionary may contain, for example, at least one selected from: a mapping relationship between an ancient place name and a modern place name, a mapping relationship between a network alias and an ancient place name, a mapping relationship between a network alias and a modern place name, or a mapping relationship between a modern alias and a modern place name. For example, an alias of "District A" includes "A", and aliases of "City B" include "B" and "B_{name_1}", a mapping relationship between "A" and "District A", a mapping relationship between "B" and "City B", and a mapping relationship between "B_{name_1}" and "City B" may be established.

It should be noted that the alias dictionary may be updated online or offline, and may also be used online or offline.

According to embodiments of the present disclosure, as the location information in the text to be recognized is generally not directly expressed as a standard name of a corresponding district or city, after the location information in the text to be recognized is recognized using the location recognition model, an official name of the recognized location information may be further determined according to the alias dictionary. For example, a text to be recognized contains location information "A_{adm_1}'" and "A". Each location information may be analyzed according to the alias dictionary. For example, it may be determined that the text to be recognized contains "City A_{adm_1}'", "District A", "City A", etc. When the recognized location information is an alias of a location, an official name of the recognized location information may be further determined according to the alias dictionary. For example, if a location information recognized from another text to be recognized includes "B_{name_1}", then it may be determined that an official name corresponding to the location information is "B", and it may be re-determined that the location information in the text to be recognized includes "B".

Through above-described embodiments of the present disclosure, the alias dictionary is introduced to recognize the alias information, which may effectively improve the integrity of the recognition result.

According to embodiments of the present disclosure, determining at least one location chain corresponding to the location information in the text to be recognized includes acquiring an administrative region knowledge graph. The administrative region knowledge graph is constructed according to administrative regions. The at least one location chain corresponding to the location information may be determined according to the administrative region knowledge graph.

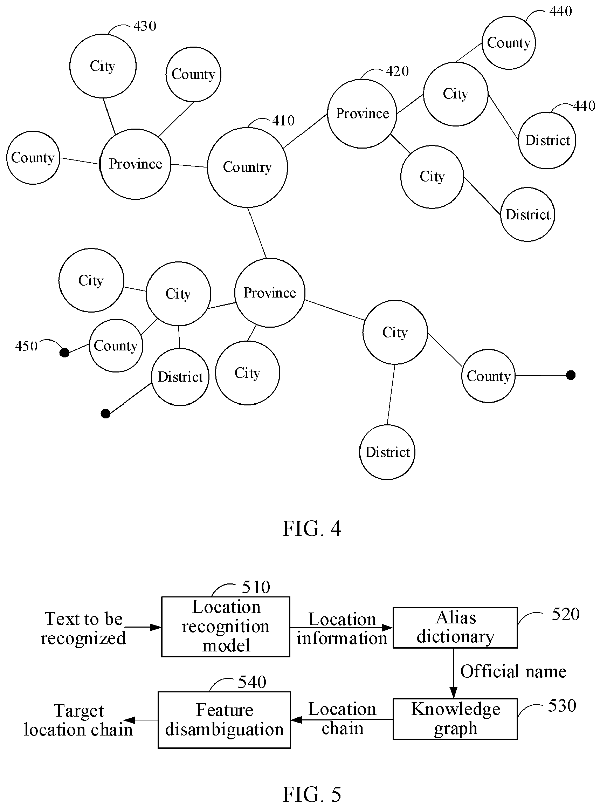

FIG. 4 schematically shows a schematic diagram of an administrative region knowledge graph according to embodiments of the present disclosure.

As shown in FIG. 4, the administrative region knowledge graph contains relevant data for all administrative regions in a country. The administrative region knowledge graph may be constructed with a country 410 as a center, a province 420 as a first level administrative region, a city 430 as a second level administrative region, a district (county) 440 as a third level administrative region and further with a township, a village, etc. as a lower level administrative region 450, combined with a subordination relationship of various levels of administrative regions. Each chain in the constructed administrative region knowledge graph may indicate a detailed and complete location information.

According to embodiments of the present disclosure, for the location information determined from the text to be recognized, at least one related location chain may be determined from the administrative region knowledge graph. For example, a location chain of "City B-Province B'" may be acquired according to "B". A plurality of location chains such as "District A-City A_{adm_1}'", "District A-City A_{adm_2}'-Province A_{adm_2}"", "City A-Province A_{adm_3}'", etc. may be acquired according to "A". If the "A_{adm1}'", "A_{adm2}"", "A_{adm2}'" and other information do not exist in the text, an automatic complementation may be performed with reference to the administrative region knowledge graph, so that a representation of a result is normalized, that is, a location in the standard form of District/County-City-Province is output.

Through above-described embodiments of the present disclosure, an introduction of the administrative region knowledge graph may cause a more normalized and standardized representation of a recall result, and further improve an integrity of the recall result.

According to embodiments of the present disclosure, determining the target location chain having a greatest degree of relevance to the text to be recognized from the at least one location chain according to the feature word indicating the location attribute in the text to be recognized may include: determining, from the at least one location chain, a location chain containing the feature word as the target location chain, in response to the feature word being consistent with a chain node in the at least one location chain.

According to embodiments of the present disclosure, each location chain may be defined as a multi-dimensional vector. For example, according to a representation form of "District/County-City-Province-Country", the location chain may be defined as a four-dimensional vector. A location information in the text to be recognized may be recognized, and then a value in the four-dimensional vector corresponding to a chain node in the location chain representing the location information in the text to be recognized is assigned 1, and a value in the four-dimensional vector corresponding to a remaining chain node is assigned 0, the target location chain may be determined according to the number of value 1 in the four-dimensional vector.

For example, if the text to be recognized contains a location information "A", an initial value of the four-dimensional vector may be determined as [1,0,0,0] based on the location information. For the location information "A" in the text to be recognized, three location chains, including "District A-City A_{adm_2}'-Province A_{adm_2}"", "District A-City A_{adm_1}'" and "City A-Province A_{adm_3}'", may be determined. If the text to be recognized further contains a location information "A_{adm_1}'" which may be used as a feature word for a further determination, then the four-dimensional vectors of the above-mentioned three location chains corresponding to the text to be recognized may be [1,0,0,0], [1,1,0,0], [0,1,0,0], respectively. According to the number of value 1 in the four-dimensional vector, it may be determined that the target location chain having a greatest degree of relevance to the text to be recognized is "District A-City A_{adm_1}'".

Through above-described embodiments of the present disclosure, a feature disambiguation method is provided, and the target location chain obtained based on the feature disambiguation has a higher accuracy.

According to embodiments of the present disclosure, determining the target location chain having a greatest degree of relevance to the text to be recognized from the at least one location chain according to the feature word indicating the location attribute in the text to be recognized may include: in response to feature words being consistent with a plurality of chain nodes belonging to at least two location chains among the at least one location chain, determining, from the at least two location chains, a location chain with a greatest number of feature words as the target location chain.

According to embodiments of the present disclosure, for example, representation results of the four-dimensional vectors related to the location information in the text to be recognized that is obtained based on the feature word in the text to be recognized may include [1,1,1,0] and [1,1,0,0]. Sizes of character strings corresponding to the two vectors may be compared, and a location chain represented by the four-dimensional vector corresponding to the character string with a larger size may be determined as the target location chain.

For example, if the text to be recognized contains "A" and "A_{adm_1}'", results of "District A-City A_{adm_1}'" and "District A-City A_{adm_1}'-A_{adm_1}'" may be obtained, and the representations of the four-dimensional vectors corresponding to the two may be, for example, [1,1,0,0] and [1,1,1,0]. According to the sizes of character strings, the latter, that is, "District A-City A_{adm_1}'-A_{adm_1}'", may be determined as the output target location chain.

For example, if the text to be recognized contains "A", "A_{adm_1}'", "A_{adm_2}"" and "A_{adm_2}'", two results of "District A-City A_{adm_1}'-A_{adm_1}'" and "District A-City A_{adm_2}'-Province A_{adm_2}"" may be obtained. As representations of four-dimensional vectors corresponding to the two location chains are both [1,1,1,0], a disambiguation of the plurality of location chains may be further performed in combination with other features.

Through above-described embodiments of the present disclosure, another feature disambiguation method is provided, and the target location chain obtained based on the feature disambiguation has a higher accuracy.

According to embodiments of the present disclosure, determining the target location chain having a greatest degree of relevance to the text to be recognized from the at least one location chain according to the feature word indicating the location attribute in the text to be recognized may include: determining a degree of association between a chain node in the at least one location chain and the feature word, and determining a location chain including a chain node with the greatest degree of association with the feature word as the target location chain.

According to embodiments of the present disclosure, in a case of determining three location chains including "District A-City A_{adm_2}'-Province A_{adm_2}"", "District A-City A_{adm_1}'-A_{adm_1}'" and "City A-Province A_{adm_3}'" for the location information "A" in the text to be recognized, it is further determined that the text to be recognized further contains, for example, a feature word of "A_{brother_1}". Due to a greater degree of association between "A_{brother_1}" and "A_{adm_1}'", it may be determined that "District A-City A_{adm_1}'-A_{adm_1}'" is the target location chain.

Through above-described embodiments of the present disclosure, another feature disambiguation method is provided, and the target location chain obtained based on the feature disambiguation has a higher accuracy.

According to embodiments of the present disclosure, determining the target location chain having a greatest degree of relevance to the text to be recognized from the at least one location chain according to the feature word indicating the location attribute in the text to be recognized may include: calculating a similarity between the at least one location chain and a target text, where the target text is a text portion in the text to be recognized, and the text portion includes the location information; and determining a location chain with a greatest similarity to the target text as the target location chain.

According to embodiments of the present disclosure, for example, for a location information of "A_{brother_1}" in the text to be recognized, "District A_{brother_1}-City A_{brother_1_adm_1}'-A_{brother_1_adm_1}'" and "District A_{brother_1}-City A_{brother_1_adm_2}'-Province A_{brother_1_adm_2}"" may be initially determined. Then, combined with a text content of a text portion, describing "A_{brother_1}", in the text to be recognized, the target location chain may be determined by determining a similarity between the text content of this text portion and "A_{brother_1_adm_1}'" and a similarity between the text content of this text portion and "A_{brother_1_adm_2}"". For example, if the text content of this text portion contains a feature word similar to a regional feature or a climatic feature of "A_{brother_1_adm_1}'", it may be determined that the target location chain is "District A_{brother_1}-City A_{brother_1_adm_1}'- A_{brother_1_adm_1}'".

Through above-described embodiments of the present disclosure, another feature disambiguation method is provided, and the target location chain obtained based on this feature disambiguation has a higher accuracy.

According to embodiments of the present disclosure, calculating the similarity between the at least one location chain and the target text may include: calculating a first word vector of each location chain of the at least one location chain; calculating a second word vector of the target text; and determining a similarity between the at least one location chain and the target text according to a similarity between the first word vector and the second word vector.

According to embodiments of the present disclosure, a word vector may indicate an ontology feature and/or an association feature of a word in multiple dimensions. By converting "A_{brother_1_adm_1}'", "A_{brother1_adm_2}"", a feature word similar to the regional feature or climatic feature of "A_{brother1_adm_1}'" and other words into word vectors, the degree of association between different words may be determined in a more refined dimension, and the similarity between different words may be calculated more accurately.

Through above-described embodiments of the present disclosure, a similarity calculation method is provided, which may effectively provide a basic support for a subsequent feature extraction.

It should be noted that the feature disambiguation methods described above are only exemplary embodiments and the present disclosure is not limited thereto. The present disclosure may further include other disambiguation methods known in the art, as long as a unique location chain having the greatest degree of relevance may be determined from a plurality of location chains.

It should be noted that the feature disambiguation methods described above may be used independently or in combination with each other, as long as a unique target location chain having the greatest degree of relevance may be determined.

FIG. 5 schematically shows a schematic diagram of a method of determining a location information according to embodiments of the present disclosure.

As shown in FIG. 5, a location recognition is performed on a text to be recognized by a location recognition model 510 determined based on the named entity recognition technology, so as to obtain at least one location information. For each location information, a corresponding official name may be determined in combination with an alias dictionary 520. For each official name, a corresponding location chain presented as a normalized result may be further determined in combination with a knowledge graph 530. For the obtained at least one location chains, a disambiguation may be further performed by a feature disambiguation module 540, so as to determine a target location chain having a greatest degree of relevance to the text to be recognized.

Through above-described embodiments of the present disclosure, a method of recognizing and normalizing an administrative region based on the named entity recognition technology is implemented, which is applicable to a Chinese text to achieve a normalization in combination with the administrative region knowledge graph and perform a disambiguation on the recognition result, so that the accuracy of the recognition result may be improved as much as possible.

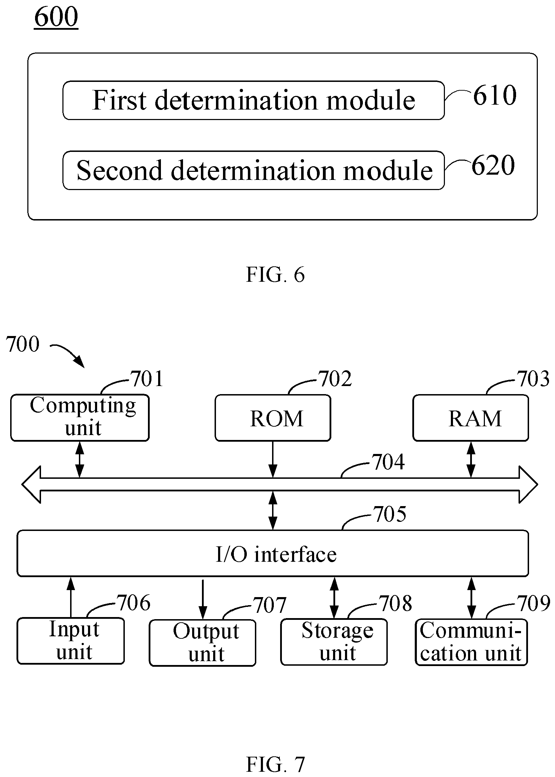

FIG. 6 schematically shows a block diagram of an apparatus of determining a location information according to embodiments of the present disclosure.

As shown in FIG. 6, an apparatus 600 of determining a location information includes a first determination module 610 and a second determination module 620.

The first determination module 610 is used to determine at least one location chain corresponding to a location information in a text to be recognized. Each location chain includes a plurality of chain nodes cascaded according to a subordination relationship, and each level of chain node represents a current level name corresponding to the location information.

The second determination module 620 is used to determine a target location chain having a greatest degree of relevance to the text to be recognized from the at least one location chain according to a feature word indicating a location attribute in the text to be recognized.

According to embodiments of the present disclosure, the second determination module includes a first definition unit.

The first definition unit is used to determine, from the at least one location chain, a location chain containing the feature word as the target location chain, in response to the feature word being consistent with a chain node in the at least one location chain.

According to embodiments of the present disclosure, the second determination module includes a second definition unit.

The second definition unit is used to: in response to feature words being consistent with a plurality of chain nodes belonging to at least two location chains among the at least one location chain, determine, from the at least two location chains, a location chain with a greatest number of feature words as the target location chain.

According to embodiments of the present disclosure, the second determination module includes a first determination unit and a third definition unit.

The first determination unit is used to determine a degree of association between a chain node in the at least one location chain and the feature word.

The third definition unit is used to determine a location chain including a chain node with a greatest degree of association with the feature word as the target location chain.

According to embodiments of the present disclosure, the second determination module includes a calculation unit and a fourth definition unit.

The calculation unit is used to calculate a similarity between the at least one location chain and a target text. The target text is a text portion in the text to be recognized, and the text portion includes the location information.

The fourth definition unit is used to determine a location chain with a greatest similarity to the target text as the target location chain.

According to embodiments of the present disclosure, the calculation unit includes a first calculation sub-unit, a second calculation sub-unit, and a determination sub-unit.

The first calculation sub-unit is used to calculate a first word vector of each location chain of the at least one location chain.

The second calculation sub-unit is used to calculate a second word vector of the target text.

The determination sub-unit is used to determine a similarity between the at least one location chain and the target text according to a similarity between the first word vector and the second word vector.

According to embodiments of the present disclosure, the apparatus of determining the location information may further include a third determination module and a fourth determination module.

The third determination module is used to determine, in response to the location information in the text to be recognized being an alias, an official name corresponding to the alias according to an alias dictionary. The alias dictionary contains a mapping relationship between the alias and the official name indicating the same location information.

The fourth determination module is used to re-determine the location information in the text to be recognized according to the official name.

According to embodiments of the present disclosure, the first determination module may include an acquisition unit and a second determination unit.

The acquisition unit is used to acquire an administrative region knowledge graph. The administrative region knowledge graph is constructed according to administrative regions.

The second determination unit is used to determine at least one location chain corresponding to the location information according to the administrative region knowledge graph.

According to embodiments of the present disclosure, the apparatus of determining the location information may further include a recognition module.

The recognition module is used to input the text to be recognized into a location recognition model to obtain the location information in the text to be recognized. The location recognition model is determined based on the named entity recognition technology.

According to embodiments of the present disclosure, the present disclosure further provides an electronic device, a readable storage medium, and a computer program product.

According to embodiments of the present disclosure, an electronic device is provided, including: at least one processor; and a memory communicatively connected to the at least one processor. The memory stores instructions executable by the at least one processor, and the instructions, when executed by the at least one processor, cause the at least one processor to implement the method of determining the location information as described above.

According to embodiments of the present disclosure, a non-transitory computer readable storage medium having computer instructions therein is provided. The computer instructions are used to cause a computer to implement the method of determining the location information as described above.

According to embodiments of the present disclosure, a computer program product containing a computer program is provided. When executed by a processor, the computer program causes the processor to implement the method of determining the location information as described above.

FIG. 7 shows a schematic block diagram of an exemplary electronic device 700 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 includes a computing unit 701 which may perform various appropriate actions and processes according to a computer program stored in a read only memory (ROM) 702 or a computer program loaded from a storage unit 708 into a random access memory (RAM) 703. In the RAM 703, various programs and data necessary for an operation of the device 700 may also be stored. The computing unit 701, the ROM 702, and the RAM 703 are connected to each other through a bus 704. An input/output (I/O) interface 705 is also connected to the bus 704.

A plurality of components in the electronic device 700 are connected to the I/O interface 705, including: an input unit 706, such as a keyboard, or a mouse; an output unit 707, such as displays or speakers of various types; a storage unit 708, such as a disk, or an optical disc; and a communication unit 709, such as a network card, a modem, or a wireless communication transceiver. The communication unit 709 allows the electronic device 700 to exchange information/data with other devices through a computer network such as Internet and/or various telecommunication networks.

The computing unit 701 may be various general-purpose and/or a dedicated processing assemblies having processing and computing capabilities. Some examples of the computing units 701 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 701 executes various methods and processing described above, such as the method of determining the location information. For example, in some embodiments, the method of determining the location information may be implemented as a computer software program which is tangibly embodied in a machine-readable medium, such as the storage unit 708. In some embodiments, the computer program may be partially or entirely loaded and/or installed in the electronic device 700 via the ROM 702 and/or the communication unit 709. The computer program, when loaded in the RAM 703 and executed by the computing unit 701, may execute one or more steps in the method of determining the location information. Alternatively, in other embodiments, the computing unit 701 may be configured to execute the method of determining the location information by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus, or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server or a server of distributed system or a server combined with block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-described specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of determining a location information, comprising:
determining (S210) at least one location chain corresponding to a location information in a text to be recognized, wherein each of the at least one location chain comprises a plurality of chain nodes cascaded according to a subordination relationship, and each level of chain node represents a current level name corresponding to the location information; and
determining (S220), from the at least one location chain, a target location chain having a greatest degree of relevance to the text to be recognized, according to a feature word indicating a location attribute in the text to be recognized.

2. The method according to claim 1, wherein the determining, from the at least one location chain, a target location chain having a greatest degree of relevance to the text to be recognized, according to a feature word indicating a location attribute in the text to be recognized comprises:
determining, from the at least one location chain, a location chain containing the feature word as the target location chain, in response to the feature word being consistent with a chain node in the at least one location chain.

3. The method according to claim 1 or 2, wherein the determining, from the at least one location chain, a target location chain having a greatest degree of relevance to the text to be recognized, according to a feature word indicating a location attribute in the text to be recognized comprises:
in response to feature words being consistent with a plurality of chain nodes belonging to at least two location chains among the at least one location chain, determining, from the at least two location chains, a location chain with a greatest number of feature words as the target location chain.

4. The method according to claim 1, wherein the determining, from the at least one location chain, a target location chain having a greatest degree of relevance to the text to be recognized, according to a feature word indicating a location attribute in the text to be recognized comprises:
determining a degree of association between a chain node in the at least one location chain and the feature word; and
determining a location chain comprising a chain node with a greatest degree of association with the feature word as the target location chain.

5. The method according to claim 1, wherein the determining, from the at least one location chain, a target location chain having a greatest degree of relevance to the text to be recognized, according to a feature word indicating a location attribute in the text to be recognized comprises:
calculating a similarity between the at least one location chain and a target text, wherein the target text is a text portion in the text to be recognized, and the text portion comprises the location information; and
determining a location chain with a greatest similarity to the target text as the target location chain.

6. The method according to claim 5, wherein the calculating a similarity between the at least one location chain and a target text comprises:
calculating a first word vector of each location chain of the at least one location chain;
calculating a second word vector of the target text; and
determining the similarity between the at least one location chain and the target text according to a similarity between the first word vector and the second word vector.

7. The method according to any one of claims 1 to 6, further comprising:
determining (S320), in response to the location information in the text to be recognized being an alias, an official name corresponding to the alias according to an alias dictionary, wherein the alias dictionary contains a mapping relationship between an alias and an official name indicating the same location; and
re-determining (S320) the location information in the text to be recognized according to the official name.

8. The method according to any one of claims 1 to 7, wherein the determining at least one location chain corresponding to a location information in a text to be recognized comprises:
acquiring an administrative region knowledge graph, wherein the administrative region knowledge graph is constructed according to administrative regions; and
determining the at least one location chain corresponding to the location information according to the administrative region knowledge graph.

9. The method according to any one of claims 1 to 8, further comprising:
inputting the text to be recognized into a location recognition model, so as to obtain the location information in the text to be recognized, wherein the location recognition model is determined based on a named entity recognition technology.

10. An apparatus (600) of determining a location information, comprising:
a first determination module (610) configured to determine at least one location chain corresponding to a location information in a text to be recognized, wherein each of the at least one location chain comprises a plurality of chain nodes cascaded according to a subordination relationship, and each level of chain node represents a current level name corresponding to the location information; and
a second determination module (620) configured to determine, from the at least one location chain, a target location chain having a greatest degree of relevance to the text to be recognized, according to a feature word indicating a location attribute in the text to be recognized.

11. The apparatus (600) according to claim 10, wherein the second determination module (620) comprises:
a first definition unit configured to determine, from the at least one location chain, a location chain containing the feature word as the target location chain, in response to the feature word being consistent with a chain node in the at least one location chain.

12. The apparatus (600) according to claim 10 or 11, wherein the second determination module (620) comprises:
a second definition unit configured to: in response to feature words being consistent with a plurality of chain nodes belonging to at least two location chains among the at least one location chain, determining, from the at least two location chains, a location chain with a greatest number of feature words as the target location chain.

13. An electronic device (700), comprising:
at least one processor; and
a memory communicatively connected to the at least one processor, wherein the memory stores instructions executable by the at least one processor, and the instructions, when executed by the at least one processor, cause the at least one processor to implement the method according to any one of claims 1 to 9.

14. A non-transitory computer-readable storage medium having computer instructions therein, wherein the computer instructions are configured to cause a computer system to implement the method according to any one of claims 1 to 9.

15. A computer program product containing a computer program, wherein the computer program, when executed by a processor, causes the processor to implement the method according to any one of claims 1 to 9.
